# EUROPEAN PATENT SPECIFICATION

(11) **EP 0 582 765 B1**
(45) Date of publication and mention of the grant of the patent: **15.11.1995**
(21) Application number: 92830444.3
(22) Date of filing: 11.08.1992
(51) Int. Cl.: B60N 2/48

(54) **A headrest for motor vehicle seats**
Kopfstütze für Kraftfahrzeugsitze
Appui-tête pour sièges de véhicules automobiles

(43) Date of publication of application: 16.02.1994
(73) Proprietor: GESTIND-M.B." MANIFATTURA DI BRUZOLO" S.P.A, I-10050 Bruzolo (Torino) (IT)
(72) Inventor: De Filippo, Emilio, I-10050 Bruzolo (Torino) (IT)
(74) Representative: Buzzi, Franco

(56) References cited:
- EP-A- 0 322 373
- FR-A- 2 571 317
- FR-A- 2 671 587
- GB-A- 1 537 551
- GB-A- 2 083 350
- GB-A- 2 101 477
- GB-A- 2 176 098

## Description

The present invention is related to headrests for motor vehicle seats, of the type comprising a resilient body in which a load bearing frame is embodied, having two lateral hollow parts within which are placed two respective support rods adapted to be inserted inferiorly within corresponding housings provided in the top zone of a seat back, and wherein first adjusting means for varying the height position of the headrest and second adjusting means for modifying the orientation of the headrest relative to the seat back are provided.

A headrest of the above-mentioned type is generally known, for instance, from EP-B-0 322 373 in the name of the same Applicant, according to which the height adjustment of the headrest is accomplished by means of a stepped system between the resilient body and the two support rods, and the orientation adjustment is carried out through two sections of the rods, mutually articulated to each other below the headrest body.

More particularly, the invention is directed to a headrest according to the pre-chacacterising portion of claim 1, and generally known from FR-A-2 571 317.

The main object of the present invention is to make the height adjustment of the headrest more simple and efficient, by means of a continuous variation, simplifying at the same time assembling of the headrest relative to the seat back.

A further object of the invention is to provide a headrest of the above-mentioned type which, in the assembled condition on the vehicle seat back, is free from plays and vibrations, so as to ensure effective steadiness and better comfort for the user.

Still another object of the invention is to provide a sturdy as well as easy and cheap to manufacture headrest, even in connection with adjustment of the orientation of the resilient body relative to the seat back.

The above objects are achieved, according to the invention, by virtue of the combination of features set forth in the characterising portion of claim 1.

The first feature of such claimed combination is generally known per se from FR-A-2 671 587.

Additional features of the invention are set forth in sub-claims 2 through 6.

The invention will now be described in details with reference to the accompanying drawings, provided only by way of non limiting example, in which:
-Figure 1 is a front-elevation fragmentary and partially sectioned view showing a headrest according to the invention,
-Figure 2 is a vertically-sectioned view taken along line II-II of Figure 1,
- Figure 3 is a view analogous to Figure 2 in the maximum-height position of the headrest,
- Figure 4 is a horizontally-sectioned partial view taken along line IV-IV of Figure 1,
- Figure 5 is a view identical to Figure 4 in the maximum-height position of Figure 3,
- Figure 6 is a view anologous to Figure 1 of a second embodiment of the invention,
- Figure 7 is a vertically-sectioned view taken along line VII-VII of Figure 6, and
- Figure 8 is a view analogous to Figure 7 in the maximum-height position of the headrest.

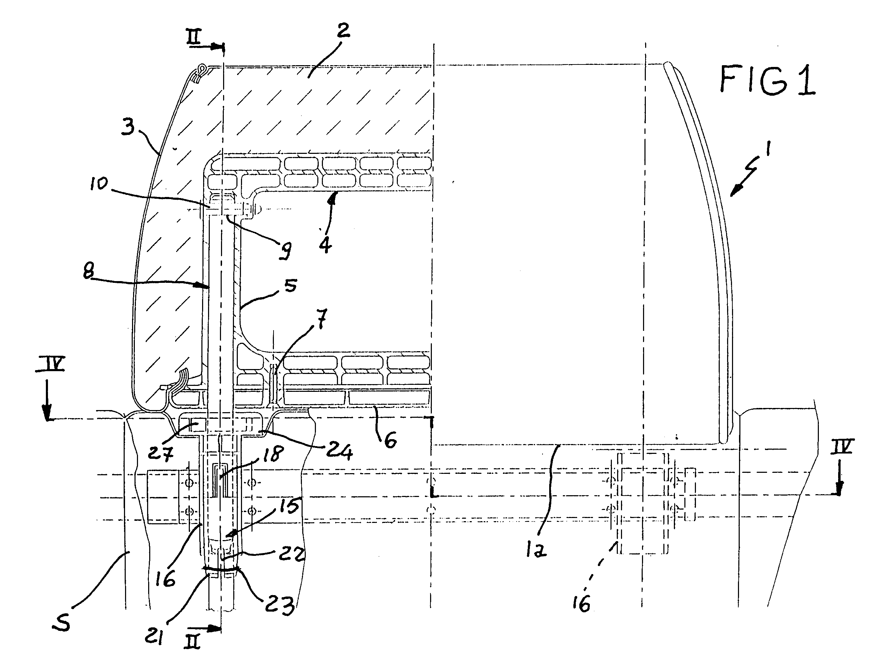

Referring initially to the embodiment shown in Figures 1 through 5, reference numeral 1 generally designates a headrest according to the invention, applied on the top of the seat back S of a motor vehicle seat.

In the following description and Claims the terms "upper", "lower" and the like are intended to be referred to the condition of use of the headrest such as shown in the drawings.
The headrest 1 comprises, in a generally conventional way, a resilient body 2, normally made of foamed plastic material, provided with an outer covering 3 and containing a rigid load bearing frame 4 conveniently made of molded plastic material.

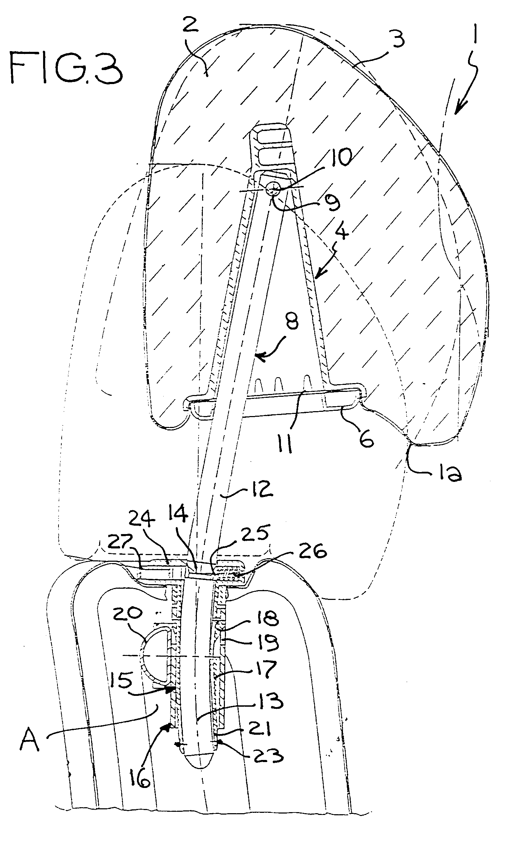

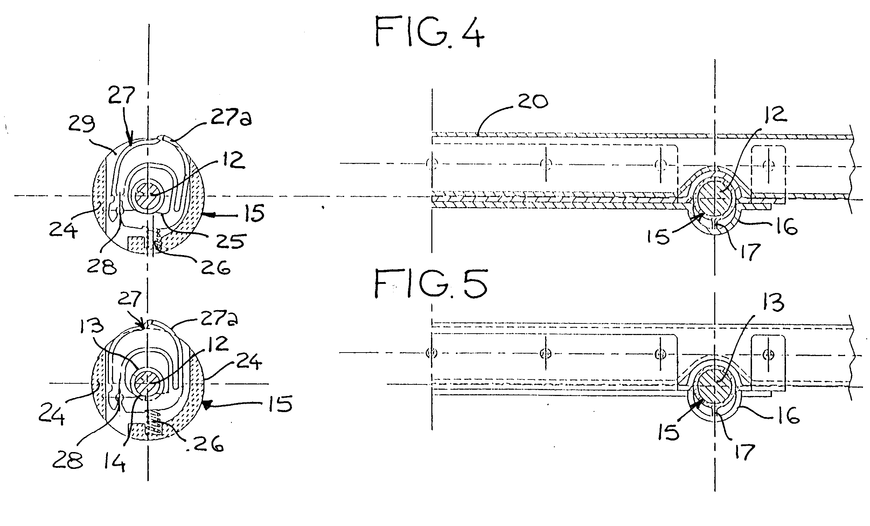

The load bearing frame 4 is formed with two lateral hollow parts 5 having in the vertical plane of Figure 1 a constant width, and having in the vertical plane of Figures 3 and 4 a width progressively increasing downwardly, i.e. towards the base of the headrest indicated as 1a. In correspondence of said base 1a, a cover 6 is fixed to the load bearig frame 4 by means of a snap-fit engagement and, in case, auxiliary screws 7. The cover 6 has an aesthetical function, and also accomplishes the task of retaining the lower portion of the outer covering 3.

Reference numerals 8 indicate two support rods, normally made of metal, by which the body 2 is supported on top of the seat back S, with adjustable height and orientation relative thereto, in the way explained herebelow.

Each support rod 8 is monolithic and is provided in proximity of its upper end with a transverse hole 9 through which a pivot pin 10, carried by the load bearing frame 4 adjacent to the top of the respective hollow lateral part 5, is fitted. The rod 8 passes through a corresponding opening 11 of the cover 6 and protrudes below the body 2 with a lower one-piece part, having a substantially straight portion 12 and a final arcuate-shaped portion 13, both having a circular cross section and connected to each other through an annular groove 14.

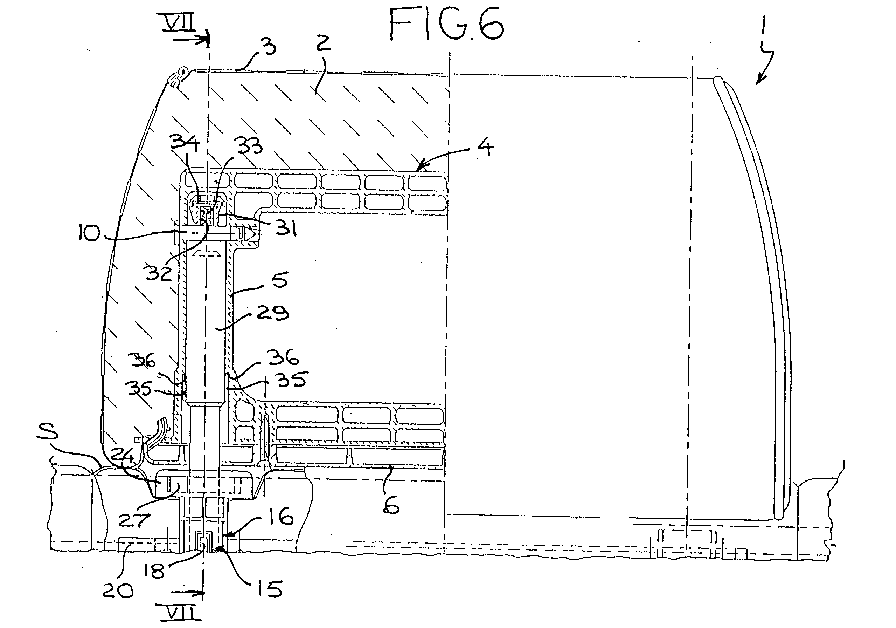

The portion 12 of each support rod 8 is frictionally slidably engaged through a respective bush 15, normally made of molded plastic material, which in turn is fitted within a respective tubular element 16, inserted from above into a housing A formed at the top of of the seat back S. As it can be better seen in Figures 4 and 5, each tubular element 16 has an enlarged cross section, and the corresponding bush 15 is formed with an outer axial centering rib 17 and, above the latter, with at least one locking tooth 18 which is axially and irreversibly snap-engaged within a corresponding axial slit 19 formed in the tubular element 16.

The two tubular elements 16 associated with the two support rods 8 are rigidly connected to a transverse support body 20 which in turn is fixed to the structure of the seat back S within the housing A. This disposition ensures the correct mutual parallelism of the two tubular elements 16, as well as an even distribution of the loads applied, in use, to the headrest 1.

Each bush 15 is further provided with an end portion 21 extending below the corresponding tubular element 16 and having a radially-contractable configuration originated by at least one axial slot 22 (Figure 1) and by the presence of a peripheral elastic ring 23 therearound. Such a configuration defines a first area of frictional sliding between the lower part 12, 13 of the rod 8 and the respective bush 15.

Above the respective tubular element 16, each bush 15 is provided with an enlarged hollow head 24 placed outside the top of the seat back S and within which is movable a pressure member 25, urged in sliding contact against the portion 12 of the correspoding support rod 8, transverse thereto, by the thrust of a reaction helical spring 26. As it is better shown in Figures 4 and 5, the pressure member 25 is formed on the inner edge of an annular push button 27 pivotally mounted around a vertical pin 28 carried by the bush 15 and having a manoeuvre portion 27a protruding from an opening 29 of the enlarged head 24 and operable, against the action of the spring 26, to shift the pressure member 25 away from the portion 12 of the rod 8. The pressure member 25 and the spring 26 define a second area of frictional sliding between each support rod 8 and the corresponding bush 15.

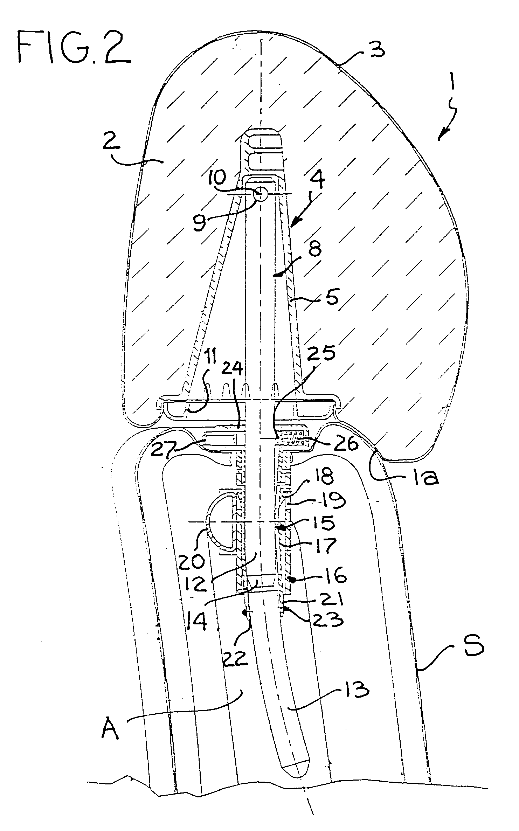

In use, the headrest 1 is movable between the fully lowered position depicted in Figures 1 and 2, and the fully raised position shown in Figure 3, and further, starting from such fully raised position, it can be removed from the seat back S.

In the fully lowered position, the base 1a rests with a shape-matching upon the top of the seat back S. Starting from this position, a displacement of the body 2 upwardly performs the frictional sliding of the lower portions 12 and 13 of the support rods 8 relative to the bushes 15: as previously explained, friction is generated superiorly by the pressure members 25 and inferiorly by the elastically-contracted lower ends 21, with the addition of the arcuate shape of the terminal portions 13 of the rods 8 and of the resilient deformability of the bushes 15. The body 2 of the headrest 1 can then be positioned with a continuous adjustment at any intermediate height comprised between the fully lowered and fully raised positions, firmly maintaining the selected position.

The fully raised position of Figure 3 is reached as soon as the peripheral grooves 14 are placed at the level of the enlarged heads 24 of the bushes 15: in such a position, the pressure members 25 are engaged within the respective grooves 14, under the action of springs 26. This situation is also depicted in the left side of Figure 5. A further displacement of the body 2 upwardly, so as to perform the complete extraction of the rods 8 from the bushes 15 and thus the removal of the headrest 1 from the seat back S, is only allowed following actuation of the push buttons 27, so as to withdraw the pressure members 25 from the grooves 14.

The pivot pins 10 between the upper ends of the support rods 8 and the load bearing frame 4 allow adjustment of the angular position of the body 2 relative to the said rods 8 and, therefore, relative to the seat back S.

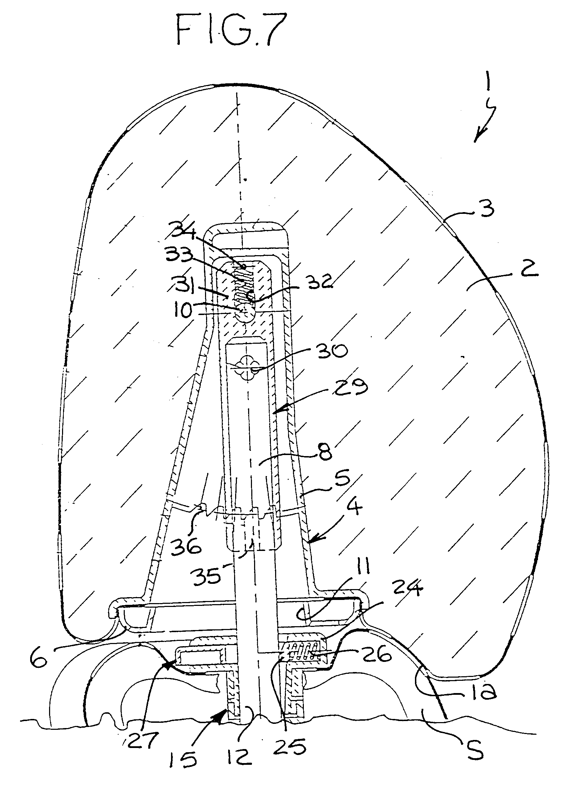

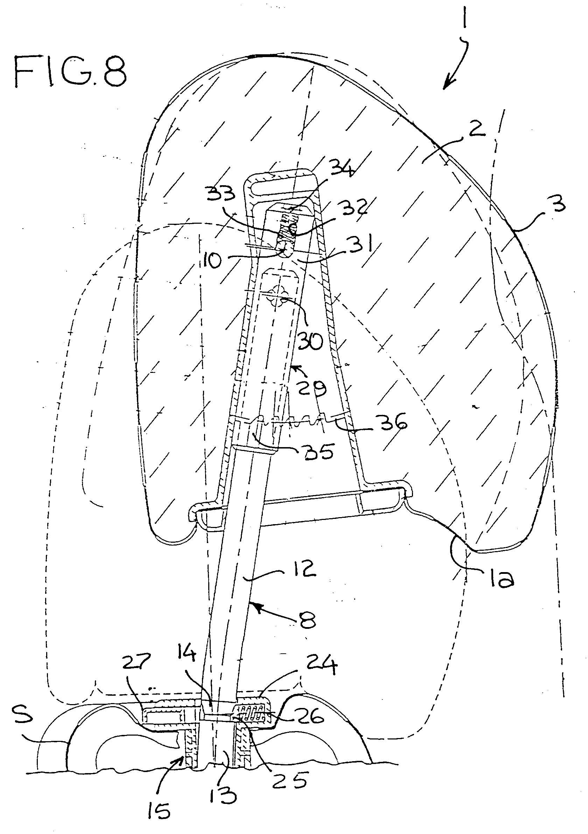

The alternative embodiment shown in Figures 6 through 8 differs from the embodiment of Figures 1-5 solely as far as the system for adjusting the angular orientation of the headrest 1 is concerned. Therefore, only these differences will be described herebelow, using the same numeral references for parts which are identical or similar to those of the embodiment described in the foregoing.

A hollow plastic-material element 29 is applied by molding on the upper end of each support rod 8 ; adhesion thereof on the rod 8 can be improved by means of one or more outer impressions 30 of the latter.

Each hollow element 29 is provided with an upper solid appendage 31 formed at the top with a central axial slot 32 , across which the respective pivot pin 10 is inserted. A helical thrust spring 33, housed within the slot 32 and held therein by means of a radial locking pin 34, urges the pivot 10 downwardly, against the bottom of the slot 32.

Inferiorly, each hollow element 29 is formed with a pair of opposed outer lateral teeth 35 (Figure 6) over which are engaged, under the action of the respective thrust spring 33, two toothed sectors 36 formed in the lower zones of the lateral sides of the corresponding tubular part 5 of the load bearing frame 4.

In order to modify the angular position of the body 2 relative to the support rods 8, and thus relative to the seat back S, it is sufficient to displace upwardly the said body 2 so as to disengage the toothed sectors 36 from the lateral teeth 35, against the action of the springs 33. After reaching the desired position of adjustment, following release of the body 2 the headrest 1 is again firmly locked in the selected angular position.

Evidently the utmost positions of angular adjustment are defined by the contrast , respectively frontal and dorsal, between the support rods 8 ( or their hollow elements 29 ) and the corresponding fore and back walls, respectively, of the relative lateral hollow parts 5 of the load bearing frame 4.

It will be apparent from the foregoing that the headrest according to the invention is constituted by an essential number of components, adapted to be manufactured and assembled easily and economically. Mounting thereof on the seat back S can be performed with a high degree of accuracy and steadiness, and adjustment thereof in connection with both height and angular position can be carried out in a practical, convenient and functional way.

Naturally the details of construction and the embodiments may be modified with respect to what has been described and illustrated, without departing from the scope of the present invention such as defined in the following claims.

## Claims

1. A headrest (1) for motor vehicle seats (S), comprising a resilient body (2) in which a load bearing frame (4) is embodied, having two lateral hollow parts (5) within which are placed two respective support rods (8) adapted to be inserted inferiorly within corresponding housings (A) provided in the top zone of a seat back (S), wherein first adjusting means for varying the height position of the headrest (1) and second adjusting means for modifying the orientation of the headrest (1) relative to the seat back (S) are provided, and wherein the two support rods (8) are frictionally slidable through respective bushes (15) which in turn are fitted within respective tubular elements (16) adapted to be incorporated in the said housings (A) of the seat back (S), each of the said rods (8) having a notch (14) defining a maximum-height position of the headrest (1) and cooperating with stop means, characterised in that:
- the said stop means comprise a slidable pressure member (25) carried by each bush (15) above the respective tubular element (16) and urged into slidable contact against the corresponding support rod (8), substantially transverse thereto, by the action of a thrust spring (26), each said pressure member (25) being engageable in the notch (14) of the respective support rod (8) in the said maximum-height position of the headrest (1), and being associated with a control push button (27) operable to move the said pressure member (25) away from the support rod (8);
- the said two bushes (15) are resiliently deformable and are engaged within the respective tubular elements (16) by means of an irreversible axial snap coupling (18, 19);
- each bush (15) has a lower end portion (21) protruding from the corresponding tubular element (16) and resiliently tightened against the respective support rod (8).

2. A headrest according to Claim 1, characterised in that the two tubular elements (16) are rigidly fixed to a transverse support body (20).

3. A headrest according to Claim 1, characterised in that the support rods (8) have at least partially an arcuate configuration (13).

4. A headrest according to any of the preceding Claims, characterised in that:
- the upper end of each support rod (8) is journalled to the load bearing frame (4) by means of a respective pivot pin (10),
- each of the the said tubular parts (5) of the load bearing frame (4) widens towards the base (1a) of the headrest (1),
- the upper end of each support rod (8) is provided with an axial slot (32) which is crossed by the said pivot pin (10) and in which an axial thrust spring (33), urging the said pivot pin (10) downwardly, is housed,
- each support rod (8) is provided with at least one lateral stop projection (35) on which is engaged, under the action of the respective thrust spring (33), at least one respective toothed sector (36) formed in the corresponding tubular part (5) of the load bearing frame (4).

5. A headrest according to Claim 1, characterised in that the axial slot (32) with the thrust spring (33) and the said at least one stop projection (35) are formed on a hollow plastic-material element (29) molded over the upper end of the respective support rod (8).

6. A headrest according to any of the preceding Claims, characterised in that the load bearing frame (4) is provided at the base (1a) of the headrest (1) with a snap- fitted cover (6).

## Patentansprüche

1. Kopfstütze (1) für Kraftfahrzeugsitze (S), mit einem nachgiebigen Körper (2) in dem ein Tragrahmen (4) vorgesehen ist, der zwei seitliche hohle Teile (5) aufweist, in denen zwei Stützstäbe (8) vorgesehen sind, die so ausgebildet sind, daß ihre unteren Enden in entsprechende Gehäuse (A) eingesetzt sind, die im oberen Bereich der Sitzlehne (S) vorgesehen sind, wobei erste Einstellmittel zum Verstellen der Höhenposition der Kopfstütze (1) und zweite Einstellmittel zum Verändern der Ausrichtung der Kopfstütze (1) relativ zur Sitzlehne (S) vorgesehen sind, und wobei die beiden Stützstäbe (8) reibungsbehaftet in entsprechende Lagerschalen (15) gleitend eingesetzt sind, welche in entsprechende rohrförmige Elemente (16) eingesetzt sind, die so ausgebildet sind, daß sie von den Gehäusen (A) der Sitzlehne (S) aufgenommen werden, und jeder der Stützstäbe (8) eine Nut (14) aufweist, die eine maximale Höhenposition der Kopfstütze (1) definiert und mit Haltemitteln zusammenwirkt, **dadurch gekennzeichnet,** daß
- das Haltemittel ein gleitendes Druckmittel (25) aufweist, welches oberhalb des rohrförmigen Elements (16) von der Lagerschale (15) getragen und in gleitendem Kontakt im wesentlichen quer gegen den entsprechenden Stützstab (8) unter der Kraft einer Druckfeder (26) gedrängt wird, wobei jedes Druckelement (25) in der maximalen Höhenposition der Kopfstütze (1) in die Nut (14) des entsprechenden Stützstabes (8) eingreift, und mit einem Steuerdruckknopf (27) verbunden ist, der derart bedienbar ist, daß das Druckelement (25) weg vom Stützstab (8) bewegt werden kann;
- daß die beiden Lagerschalen (15) nachgiebig verformbar sind und mit den jeweiligen rohrförmigen Elementen (16) mittels irreversibler axialer Schnappverbindungen (18, 19) verbunden sind;
- daß jede Lagerschale (15) einen unteren Endabschnitt (21) aufweist, der über das jeweilige rohrförmige Element (16) vorsteht und nachgiebig am jeweiligen Stützstab (8) befestigt ist.

2. Kopfstütze nach Anspruch 1, dadurch gekennzeichnet, daß die beiden rohrförmigen Elemente (16) starr an einem Querträger (20) befestigt sind.

3. Kopfstütze nach Anspruch 1, dadurch gekennzeichnet, daß die Stützstäbe (8) wenigstens teilweise eine gebogene Gestalt (13) aufweisen.

4. Kopfstütze nach einem der vorhergehenden Ansprüche, dadurch gekennzeichnet, daß
- das oberen Ende eines jeden Stützstabes (8) mittels eines Schwenkstiftes (10) schwenkbeweglich gegenüber dem Tragrahmen (4) ist,
- jedes der rohrförmigen Teile (5) des Tragrahmens (4) sich in Richtung der Basis (1a) der Kopfstütze (1) erweitert,
- das obere Ende eines jeden Stützstabes (8) mit einem axialen Schlitz (32) versehen ist, der vom Schwenkstift (10) gekreuzt wird und in dem eine axiale Druckfeder (33) untergebracht ist, die den Schwenkstift (10) nach unten drückt,
- jeder Stützstab (8) mit wenigstens einem seitlichen Haltevorsprung (35) versehen ist, der unter der Kraft der Druckfeder (33) mit wenigstens einem gezahnten Sektor (36) in Eingriff steht, der im rohrförmigen Teil (5) des Tragrahmens (4) vorgesehen ist.

5. Kopfstütze nach Anspruch 1, dadurch gekennzeichnet, daß der axiale Schlitz (32) mit der Druckfeder (33) und der wenigstens einen Haltevorsprung (35) an einem hohlen Element (29) aus Kunststoffmaterial vorgesehen sind, das über das obere Ende des Stützstabes (8) gespritzt ist.

6. Kopfstütze nach einem der vorhergehenden Ansprüche, dadurch gekennzeichnet, daß der Tragrahmen (4) an der Basis (1a) der Kopfstütze (1) mit einer aufschnappbaren Abdeckung (6) versehen ist.

## Revendications

1. Appui-tête (1) pour des sièges (S) de véhicules automobiles, comprenant un corps élastique (2) dans lequel est noyée une armature (4) qui encaisse les charges, possédant deux parties creuses latérales (5) à l'intérieur desquelles sont placées deux tiges de support respectives (8) adaptées à être introduites à la partie inférieure à l'intérieur de boîtiers correspondants (A) prévus dans la zone supérieure d'un dossier (S); dans lequel sont prévus des premiers moyens de réglage pour faire varier la position en hauteur de l'appui-tête (1) et des seconds moyens de réglage pour modifier l'orientation de l'appui-tête (1) par rapport au dossier (S) ; et dans lequel les deux tiges de support (8) sont en coulissement à friction à travers des douilles respectives (15) qui sont assemblées à leur tour dans des éléments tubulaires respectifs (16) adaptés à être incorporés dans lesdits boîtiers (A) du dossier de siège (S), chacune desdites tiges (8) présentant une entaille (14) qui définit une position de hauteur maximum de l'appui-tête (1), et coopérant avec des moyens d'arrêt, caractérisé en ce que :
- lesdits moyens d'arrêt comprennent un élément de pression coulissant (25) porté par chaque douille (15) au-dessus de l'élément tubulaire respectif (16) et repoussé en contact de coulissement contre la tige de support correspondante (8), sensiblement transversalement à celle-ci, par l'action d'un ressort de poussée (26), chacun desdits éléments de pression (25) pouvant être engagé dans l'entaille (14) de la tige de support respective (8) dans ladite position de hauteur maximum de l'appui-tête (1), et étant associé à un bouton-poussoir de commande (27) susceptible d'être actionné pour déplacer ledit élément de pression (25) en éloignement de la tige de support (8) ;
- lesdites deux douilles (15) sont déformables élastiquement et sont engagées à l'intérieur des éléments tubulaires respectifs (16) au moyen d'un accouplement par enclenchement axial irréversible (18, 19) ;
- chaque douille (15) a une partie d'extrémité inférieure (21) qui se projette depuis l'élément tubulaire correspondant (16) et qui est serrée élastiquement contre la tige de support respective (8).

2. Appui-tête selon la revendication 1, caractérisé en ce que les deux éléments tubulaires (16) sont fixés rigidement à un corps de support transversal (20).

3. Appui-tête selon la revendication 1, caractérisé en ce que les tiges de support (8) ont au moins partiellement une configuration cintrée (13).

4. Appui-tête selon l'une quelconque des revendications précédentes, caractérisé en ce que :
- l'extrémité supérieure de chaque tige de support (8) est montée en rotation sur l'armature (4) capable d'encaisser les charges, au moyen d'une broche de pivot respective (10),
- chacune desdites parties tubulaires (5) de l'armature (4) va en s'élargissant en direction de la base (1a) de l'appui-tête (1),
- l'extrémité supérieure de chaque tige de support (8) est pourvue d'une fente axiale (32) qui est traversée par ladite broche de pivot (10), et dans laquelle est logé un ressort de poussée axial (33) qui repousse ladite broche de pivot (10) vers le bas,
- chaque tige de support (8) est pourvue d'au moins une projection d'arrêt latérale (35) sur laquelle est engagé, sous l'action du ressort de poussée respectif (33), au moins un secteur denté respectif (36) formé dans la partie tubulaire correspondante (5) de l'armature (4).

5. Appui-tête selon la revendication 1, caractérisé en ce que la fente axiale (32) avec le ressort de poussée (33) et ladite au moins une projection d'arrêt (35), sont formées sur un élément creux en matière plastique (29) moulé par-dessus l'extrémité supérieure de la tige de support respective (8).

6. Appui-tête selon l'une quelconque des revendications précédentes, caractérisé en ce que l'armature (4) capable d'encaisser les charges est pourvue à la base (1a) de l'appui-tête (1) d'une couverture (6) montée par emboîtement.
